# EUROPEAN PATENT APPLICATION

(11) **EP 4 836 432 A1**
(43) Date of publication of application: **04.11.2026**
(21) Application number: 25214286.4
(22) Date of filing: 07.11.2025
(51) Int. Cl.: H04N 23/60, H04N 23/65

(54) **BODY CAMERA AND METHOD OF CONTROLLING THE SAME**

(30) Priority: 28.04.2025 CN 202510544965
(71) Applicant: Getac Technology Corporation, New Taipei City 221009 (TW)
(72) Inventor: CHEN, Hung-Xin, 11568 Taipei City (TW); CHEN, Kuan-Yu, 11568 Taipei City (TW)
(74) Representative: Viering, Jentschura & Partner mbB Patent- und Rechtsanwälte

(57) **Abstract**

A method of controlling a body camera includes: controlling an image capturing device of the body camera to capture a first streaming image and a second streaming image of the image capturing device based on a first protocol and a second protocol of the body camera; enabling the image capturing device to stop capturing the first streaming image and the second streaming image when the body camera is docked with a base body; and enabling the image capturing device to allow capturing the first streaming image and the second streaming image when the body camera is not docked with the base body.

## Description

### BACKGROUND

### Field of Disclosure

The present disclosure relates to a body camera and a method of controlling the same.

### Description of Related Art

In general, a user utilizes a body camera to record scenes from a first-person perspective. For example, law enforcement officers use body cameras to record situations at law enforcement sites, which not only improves the transparency of the enforcement process but also allows for fact verification through video footage in the event of disputes.

However, conventional body cameras can only perform video streaming services under a single communication protocol. For instance, commercially available body cameras are either dedicated for use in internal networks or for use in cross-domain networks, and none of the body cameras are simultaneously applicable to different types of communication protocols. In addition, the demand for users to instantly record scenes during emergency situations is increasing. The existing control methods of body cameras can no longer meet the users' needs.

Therefore, how to propose a body camera and a method of controlling the same that can improve this situation represents a critical area that the industry urgently keen to invest in research and development resources to solve.

### SUMMARY

In view of this, one purpose of the present disclosure is to provide a body camera and a method of controlling the same that can solve the aforementioned problems.

In order to achieve the above objective, in accordance with an embodiment of the present disclosure, a method of controlling a body camera includes: controlling an image capturing device of the body camera to capture a first streaming image and a second streaming image of the image capturing device based on a first protocol and a second protocol of the body camera; enabling the image capturing device to stop capturing the first streaming image and the second streaming image when the body camera is docked with a base body; and enabling the image capturing device to allow capturing the first streaming image and the second streaming image when the body camera is not docked with the base body.

In one or more embodiments of the present disclosure, the first streaming image is based on the first protocol, and the second streaming image is based on the second protocol.

In one or more embodiments of the present disclosure, the first protocol is a real-time streaming protocol (RTSP), and the second protocol is a real-time messaging protocol (RTMP).

In one or more embodiments of the present disclosure, controlling the image capturing device of the body camera to capture the first streaming image and the second streaming image of the image capturing device further includes: sending a streaming request to the body camera by a request device; determining whether a domain of the body camera matches a domain of the request device; controlling the image capturing device to capture the first streaming image in response to the streaming request and transmitting the first streaming image to the request device under the first protocol when the domain of the body camera matches the domain of the request device; and controlling the image capturing device to capture the second streaming image in response to the streaming request and transmitting the second streaming image to the request device under the second protocol when the domain of the body camera is different from the domain of the request device.

In one or more embodiments of the present disclosure, the image capturing device transmits the second streaming image to a media server under the second protocol, and the media server transmits the second streaming image to the request device.

In one or more embodiments of the present disclosure, the base body is enabled to charge the body camera when the body camera is docked with the base body.

In one or more embodiments of the present disclosure, the method further includes: controlling the image capturing device to capture the first streaming image and the second streaming image when the body camera is activated.

In order to achieve the above objective, in accordance with an embodiment of the present disclosure, a method of controlling a body camera includes: controlling an image capturing device of the body camera to capture a first streaming image and a second streaming image based on a communication protocol of the body camera, wherein the communication protocol comprises a first protocol and a second protocol; enabling a base body to charge the body camera when the body camera is docked with the base body; and enabling the image capturing device to capture the first streaming image and the second streaming image when the body camera is not docked with the base body.

In one or more embodiments of the present disclosure, the first streaming image is based on the first protocol, and the second streaming image is based on the second protocol.

In one or more embodiments of the present disclosure, the first protocol is a real-time streaming protocol, and the second protocol is a real-time messaging protocol.

In one or more embodiments of the present disclosure, controlling the image capturing device of the body camera to capture the first streaming image and the second streaming image of the image capturing device further includes: sending a streaming request to the body camera by a request device; determining whether a domain of the body camera matches a domain of the request device; controlling the image capturing device to capture the first streaming image in response to the streaming request and transmitting the first streaming image to the request device under the first protocol when the domain of the body camera matches the domain of the request device; and controlling the image capturing device to capture the second streaming image in response to the streaming request and transmitting the second streaming image to the request device under the second protocol when the domain of the body camera is different from the domain of the request device.

In one or more embodiments of the present disclosure, the image capturing device transmits the second streaming image to a media server under the second protocol, and the media server transmits the second streaming image to the request device.

In one or more embodiments of the present disclosure, the image capturing device is stopped from capturing the first streaming image and the second streaming image when the body camera is docked with the base body.

In one or more embodiments of the present disclosure, the method further includes: controlling the image capturing device to capture the first streaming image and the second streaming image when the body camera is activated.

In order to achieve the above objective, in accordance with an embodiment of the present disclosure, a body camera includes an image capturing device, a communication module, a protocol switching module, a common memory, and a processor. The image capturing device is configured to capture a first streaming image and a second streaming image. The communication module is configured to be connected to an internet. The protocol switching module is configured to switch a communication protocol of the body camera between a first protocol and a second protocol. The common memory is configured to store the first streaming image based on the first protocol and the second streaming image based on the second protocol. The processor is electrically or communicatively connected to the image capturing device, the communication module, the protocol switching module, and the common memory. The processor is configured to: control the image capturing device to capture the first streaming image or the second streaming image based on the communication protocol of the body camera; enable the image capturing device to allow capturing the first streaming image and the second streaming image when the body camera is not docked with a base body; and enable the image capturing device to stop capturing the first streaming image and the second streaming image when the body camera is docked with the base body.

In one or more embodiments of the present disclosure, the communication module is further configured to receive a streaming request from a request device.

In one or more embodiments of the present disclosure, the processor is further configured to: determine whether a domain of the body camera matches a domain of the request device; control the image capturing device to capture the first streaming image in response to the streaming request and transmit the first streaming image to the request device under the first protocol when the domain of the body camera matches the domain of the request device; and control the image capturing device to capture the second streaming image in response to the streaming request and transmit the second streaming image to the request device under the second protocol when the domain of the body camera is different from the domain of the request device.

In one or more embodiments of the present disclosure, the image capturing device transmits the second streaming image to a media server under the second protocol, and the media server transmits the second streaming image to the request device.

In one or more embodiments of the present disclosure, the processor is configured to: enable the base body to allow charging the body camera when the body camera is docked with the base body.

In one or more embodiments of the present disclosure, the processor is further configured to: control the image capturing device to capture the first streaming image and the second streaming image when the body camera is activated.

In summary, in the body camera and the method of controlling the same of the present disclosure, since the body camera includes a protocol switching module, the processor can determine whether to transmit the corresponding streaming image to a request device using a first protocol or a second protocol by determining whether a domain of the body camera matches a domain of the request device. In the body camera and the method of controlling the same of the present disclosure, because the image capturing device stops capturing the first streaming image and the second streaming image only when the body camera is docked with a base body, the base body can charge the body camera during docking, and the body camera can continue capturing streaming images when it is not docked. In the body camera and the method of controlling the same of the present disclosure, because the image capturing device is enabled to capture the first streaming image and the second streaming image when the body camera is not docked with the base body, the body camera can immediately stream the current image when it is detached from the base body by the user, thereby enabling real-time recording of scenes during emergency situations. Overall, the body camera and the method of controlling the same of the present disclosure not only provide audio and video streaming services under different communication protocols but also achieve the purpose of allowing users to immediately activate the body camera to stream images in emergency conditions.

It is to be understood that both the foregoing general description and the following detailed description are by examples, and are intended to provide further explanation of the disclosure as claimed.

### BRIEF DESCRIPTION OF THE DRAWINGS

The disclosure can be more fully understood by reading the following detailed description of the embodiment, with reference made to the accompanying drawings as follows:
Fig. 1 is a functional block diagram of a body camera streaming system in accordance with an embodiment of the present disclosure;
Fig. 2 is a flowchart of a method for controlling a body camera in accordance with an embodiment of the present disclosure;
Fig. 3 is a flowchart for controlling a body camera in accordance with an embodiment of the present disclosure;
Fig. 4A is a schematic view of a body camera in accordance with an embodiment of the present disclosure;
Fig. 4B is a schematic view of a display device of the body camera displaying a text message in accordance with an embodiment of the present disclosure;
Fig. 4C is a schematic view of a display device of the body camera displaying a text message in accordance with an embodiment of the present disclosure;
Fig. 5A is a schematic view of the body camera docked with a base body and being in a first state in accordance with an embodiment of the present disclosure;
Fig. 5B is a schematic view of a display device of the body camera displaying a text message in accordance with an embodiment of the present disclosure;
Fig. 6A is a schematic view of the body camera not docked with the base body and being in a second state in accordance with an embodiment of the present disclosure; and
Fig. 6B is a schematic view of a display device of the body camera displaying a text message in accordance with an embodiment of the present disclosure.

### DETAILED DESCRIPTION

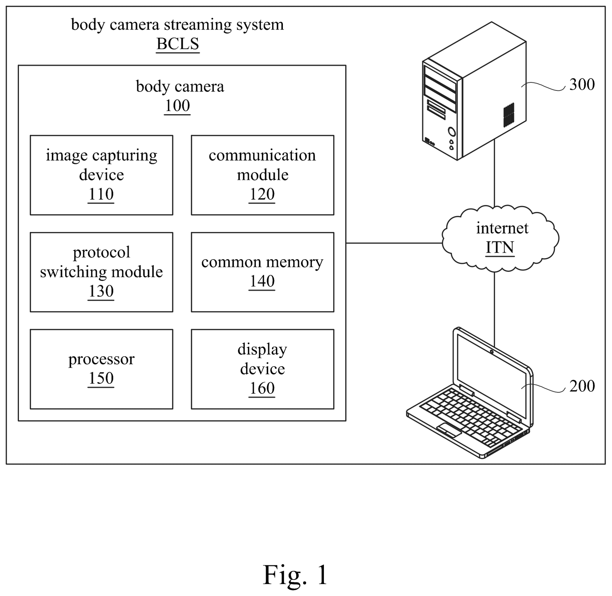

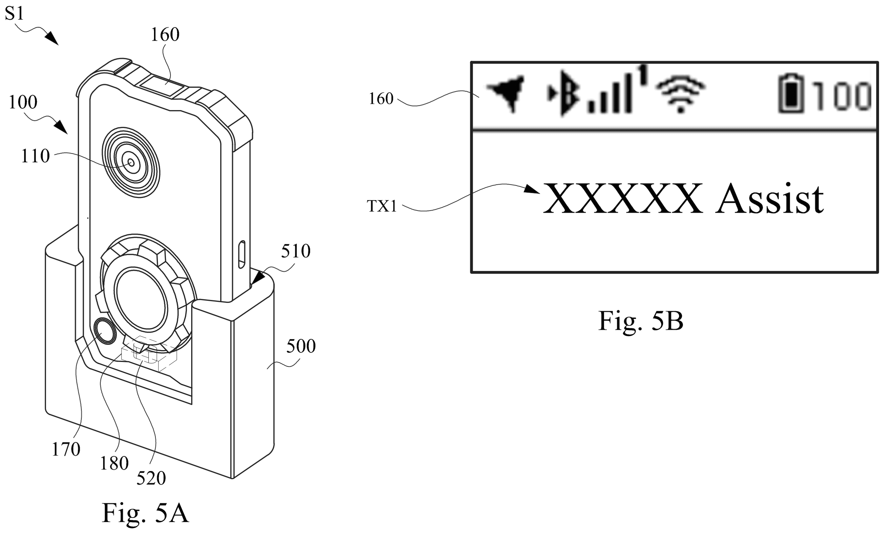

Reference is made to Fig. 1. Fig. 1 illustrates a functional block diagram of a body camera streaming system BCLS in accordance with an embodiment of the present disclosure. As shown in Fig. 1, in this embodiment, the body camera streaming system BCLS includes a body camera 100, a request device 200, a media server 300, and an internet ITN. The body camera 100, the request device 200, and the media server 300 are communicatively connected to each other via the internet ITN. The request device 200 is configured to send a streaming request to the body camera 100. The body camera 100 transmits a streaming image to the request device 200 in response to the streaming request. The body camera 100 is configured to be docked with a base body 500 (as shown in Fig. 5A). In some embodiments, the body camera 100 transmits a streaming image to the media server 300, and the media server 300 transmits the streaming image to the request device 200. The body camera 100 includes an image capturing device 110, a communication module 120, a protocol switching module 130, a common memory 140, a processor 150, and a display device 160. The image capturing device 110 is configured to capture a first streaming image and a second streaming image. The communication module 120 is configured to connect to the internet ITN. The communication module 120 is further configured to receive a streaming request from the request device 200. The protocol switching module 130 is configured to switch a communication protocol of the body camera 100 between a first protocol and a second protocol. The common memory 140 is configured to store the first streaming image based on the first protocol and the second streaming image based on the second protocol.

Reference is made again to Fig. 1. As shown in Fig. 1, in this embodiment, the processor 150 is electrically or communicatively connected to the image capturing device 110, the communication module 120, the protocol switching module 130, the common memory 140, and the display device 160. The processor 150 is configured to control the image capturing device 110 to capture the first streaming image or the second streaming image based on the communication protocol of the body camera 100. The processor 150 is further configured to enable the image capturing device 110 to allow capturing the first streaming image and the second streaming image when the body camera 100 is not docked with the base body 500. The processor 150 is further configured to enable the image capturing device 110 to stop capturing the first streaming image and the second streaming image when the body camera 100 is docked with the base body 500. The processor 150 is further configured to determine whether a domain of the body camera 100 matches a domain of the request device 200. The processor 150 is further configured to: when the domain of the body camera 100 matches the domain of the request device 200, control the image capturing device 110 to capture the first streaming image in response to the streaming request and transmit the first streaming image to the request device 200 under the first protocol; and when the domain of the body camera 100 is different from the domain of the request device 200, control the image capturing device 110 to capture the second streaming image in response to the streaming request and transmit the second streaming image to the request device 200 under the second protocol. The processor 150 is further configured to enable the base body 500 to allow charging the body camera 100 when the body camera 100 is docked with the base body 500. The processor 150 is further configured to control the image capturing device 110 to capture the first streaming image and the second streaming image when the body camera 100 is activated. The display device 160 is configured to display a text message TX1 and a text message TX2 under control of the processor 150.

In some embodiments, the first protocol and the second protocol are different.

In some embodiments, the first streaming image is generated only under the first protocol and is incompatible with the second protocol, and the second streaming image is generated only under the second protocol and is incompatible with the first protocol.

In some embodiments, the first protocol is a Real Time Streaming Protocol (RTSP). In some embodiments, the second protocol is a Real Time Messaging Protocol (RTMP). However, the present disclosure is not intended to be limited to the types of the first protocol and the second protocol.

In some embodiments, the body camera 100 may be, for example, a handheld body camera, a wearable body camera, a head-mounted body camera, a modular body camera, a multifunctional smart body camera, or any other possible type of body camera.

In some embodiments, the request device 200 may be a notebook, a desktop computer, a smartphone, a tablet, or any other possible electronic device. The present disclosure is not intended to be limited to the types of the body camera 100.

In some embodiments, the image capturing device 110 may be a camera or any other suitable imaging device configured to capture images. The present disclosure is not intended to be limited to the types of the image capturing device 110.

In some embodiments, the image capturing device 110 transmits the second streaming image to the media server 300 under the second protocol, and the media server 300 transmits the second streaming image to the request device 200.

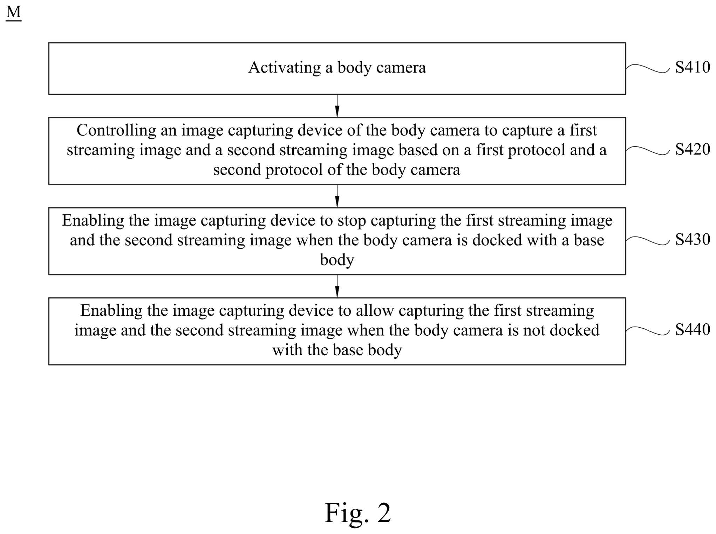

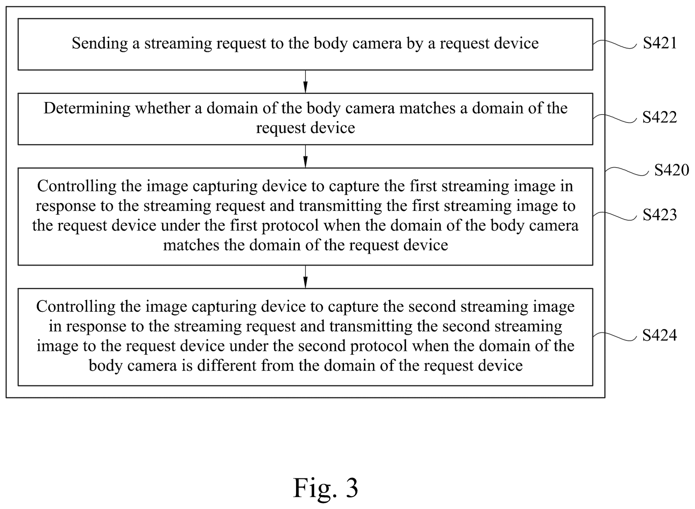

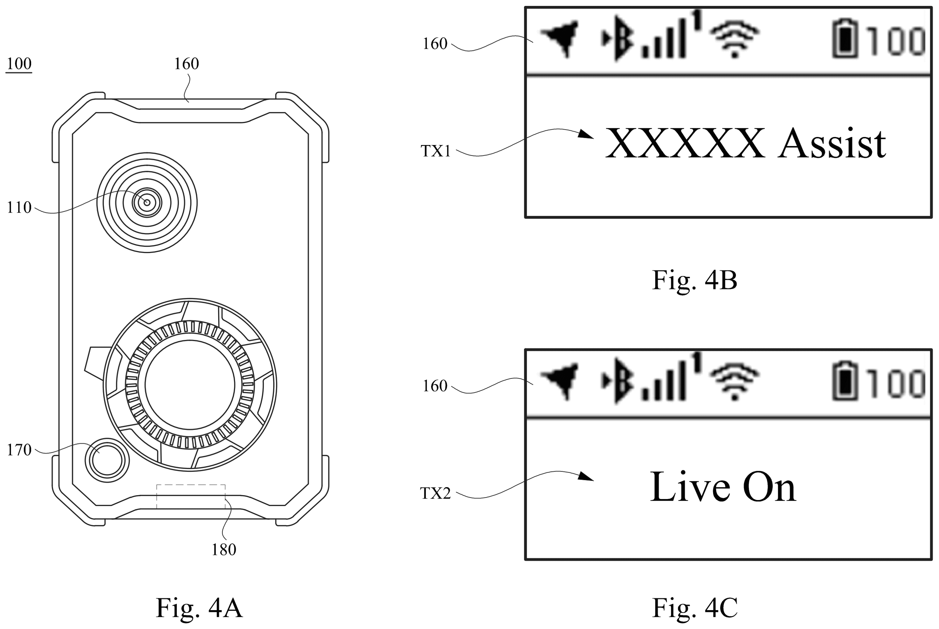

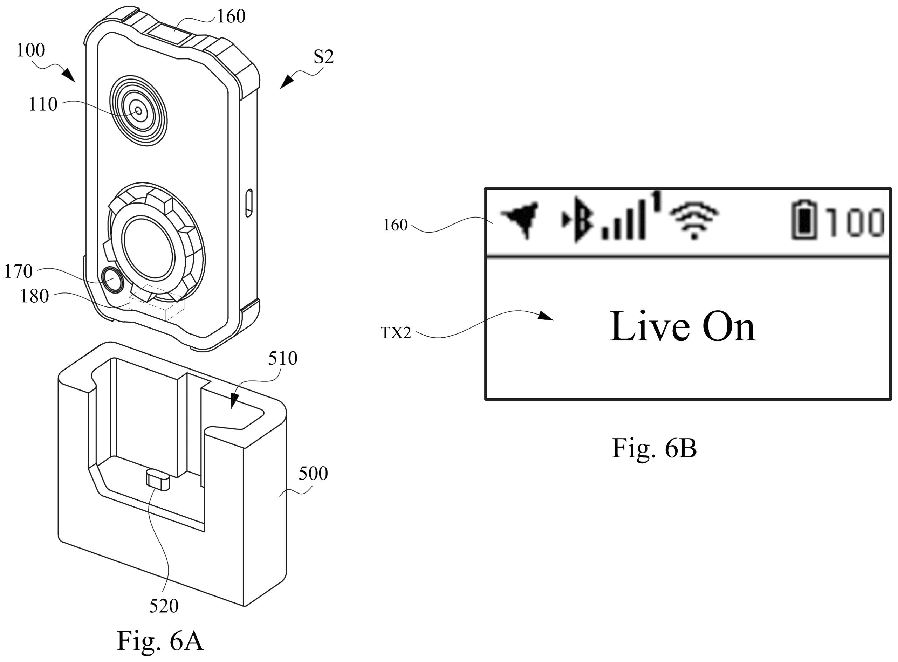

Fig. 2 illustrates a flowchart of a method M for controlling the body camera 100 in accordance with an embodiment of the present disclosure. As shown in Fig. 2, the method M includes Step S410, Step S420, Step S430, and Step S440. For better understanding of Step S410, please refer to Fig. 2, Fig. 4A, Fig. 4B, and Fig. 4C. For better understanding of Step S420, please refer to Fig. 2 and Fig. 3. For better understanding of Step S430, please refer to Fig. 2, Fig. 5A, and Fig. 5B. For better understanding of Step S440, please refer to Fig. 2, Fig. 6A, and Fig. 6B.

Fig. 3 illustrates a flowchart of Step S420 of controlling the body camera 100 in accordance with an embodiment of the present disclosure. As shown in Fig. 3, Step S420 includes Step S421, Step S422, Step S423, and Step S424. For better understanding of Steps S421, S422, S423, and S424, reference is made to Fig. 1 and Fig. 3.

The following provides a detailed description of Step S410, Step S420, Step S430, and Step S440.

Step S410: Activating the body camera 100.

Fig. 4A illustrates a schematic view of the body camera 100 in accordance with an embodiment of the present disclosure. Fig. 4B and Fig. 4C illustrate schematic views of a display device 160 of the body camera 100 displaying text messages TX1 and TX2 in accordance with an embodiment of the present disclosure. As shown in Fig. 4A, in this embodiment, the body camera 100 further includes a power switch 170 and a socket 180. The display device 160 and the socket 180 are located on the edge of the body camera 100 and are disposed on different surfaces of the body camera 100. The image capturing device 110 and the power switch 170 are exposed on the same surface. The power switch 170 is configured to be triggered to activate and deactivate the body camera 100. In some embodiments, the power switch 170 may be provided in the form of a button on a surface of the body camera 100, such that a user may press the power switch 170 to activate or deactivate the body camera 100. The socket 180 is configured to be coupled to the base body 500 to be electrically connected thereto. In some embodiments, the socket 180 includes a female connector. As shown in Fig. 4B and Fig. 4C, in this embodiment, after the body camera 100 is activated, the display device 160 is configured to display the text messages TX1 and TX2. As shown in Fig. 4B, when the body camera 100 is in an idle mode, the display device 160 displays the text message TX1 to inform the user that the body camera 100 is in idle mode. As shown in Fig. 4C, when the body camera 100 is in a working mode, the display device 160 displays the text message TX2 to inform the user that the body camera 100 is in working mode.

Step S420: Controlling the image capturing device 110 of the body camera 100 to capture a first streaming image and a second streaming image based on a first protocol and a second protocol of the body camera 100.

Reference is made again to Fig. 2 and Fig. 3. As shown in Fig. 2 and Fig. 3, the image capturing device 110 of the body camera 100 is configured to be controlled to capture the first streaming image and the second streaming image, and the image capturing device 110 captures the first streaming image and the second streaming image based on the first protocol and the second protocol. Specifically, the first streaming image is compatible with the first protocol, and the second streaming image is compatible with the second protocol. Accordingly, when the communication protocol of the body camera 100 is the first protocol, the image capturing device 110 at least captures the first streaming image. When the communication protocol of the body camera 100 is the second protocol, the image capturing device 110 at least captures the second streaming image.

In one embodiment, after the body camera 100 is activated by its user, the body camera 100 controls the image capturing device 110 to capture the first streaming image and the second streaming image based on the first protocol and the second protocol.

In some embodiments, controlling the image capturing device 110 of the body camera 100 to capture the first streaming image and the second streaming image based on the first protocol and the second protocol (i.e., Step S420) is performed after activating the body camera 100 (i.e., Step S410).

The following provides a detailed description of Step S421, Step S422, Step S423, and Step S424.

Step S421: Sending a streaming request to the body camera 100 by the request device 200.

Reference is made again to Fig. 1. As shown in Fig. 1, in this embodiment, the request device 200 may send a streaming request to the body camera 100. Specifically, to obtain the first streaming image and the second streaming image captured by the image capturing device 110 of the body camera 100, the request device 200 may send a streaming request to the body camera 100, and the communication module 120 receives the streaming request from the request device 200. In some embodiments, the request device 200 sends the streaming request to the body camera 100 via the internet ITN.

In one embodiment, when a user desires to obtain the first streaming image or the second streaming image, the user may operate the request device 200 and control the request device 200 to send a streaming request to the body camera 100 via the internet ITN. Then, the communication module 120 of the body camera 100 receives the streaming request from the request device 200.

In some embodiments, sending a streaming request from the request device 200 to the body camera 100 (i.e., Step S421) is performed after activating the body camera 100 (i.e., Step S410).

Step S422: Determining whether a domain of the body camera 100 matches a domain of the request device 200.

As shown in Fig. 1, in this embodiment, after the communication module 120 of the body camera 100 receives a streaming request from the request device 200, the processor 150 of the body camera 100 determines whether a domain of the body camera 100 matches a domain of the request device 200. Specifically, by determining whether the domain of the body camera 100 and the domain of the request device 200 are the same or different, the processor 150 determines under which communication protocol the corresponding streaming image is to be transmitted. For relevant details, see the following description of Step S423. In some embodiments, the processor 150 determines whether the domain of the body camera 100 and the domain of the request device 200 are the same in order to decide whether to transmit the first streaming image or the second streaming image under the first protocol or the second protocol.

In one embodiment, after the communication module 120 of the body camera 100 receives a streaming request sent by the user using the request device 200, the processor 150 of the body camera 100 automatically detects the domain of the body camera 100 and the domain of the request device 200. Then, when the processor 150 of the body camera 100 obtains the domain name of the body camera 100 and the domain name of the request device 200, the processor 150 determines the domain of the body camera 100 matches or is different from the domain of the request device 200.

In some embodiments, determining whether the domain of the body camera 100 matches the domain of the request device 200 (i.e., Step S422) is performed after sending a streaming request from the request device 200 to the body camera 100 (i.e., Step S421).

Step S423: Controlling the image capturing device 110 to capture the first streaming image in response to the streaming request and transmitting the first streaming image to the request device 200 under the first protocol when the domain of the body camera 100 matches the domain of the request device 200.

As shown in Fig. 1, in this embodiment, when the processor 150 of the body camera 100 determines that the domain of the body camera 100 matches the domain of the request device 200, the processor 150 controls the image capturing device 110 to capture the first streaming image in response to the streaming request and transmits the first streaming image to the request device 200 under the first protocol. Specifically, in the case where the domain of the body camera 100 matches the domain of the request device 200, the protocol switching module 130 of the body camera 100 switches the communication protocol of the body camera 100 to the first protocol. When the communication protocol of the body camera 100 is the first protocol, the processor 150 transmits the first streaming image captured by the image capturing device 110 to the request device 200. In some embodiments in which the domain of the body camera 100 matches the domain of the request device 200, the first protocol may be, for example, a Real-Time Streaming Protocol (RTSP). In other words, when the domain of the body camera 100 matches the domain of the request device 200, the body camera 100 may transmit the first streaming image to the request device 200 under the first protocol via the network ITN that is of an internal network type.

In one embodiment, when the processor 150 of the body camera 100 determines that the domain of the body camera 100 matches the domain of the request device 200, the processor 150 controls the protocol switching module 130 to switch the communication protocol to the first protocol in response to the streaming request from the request device 200. Then, the user of the request device 200 receives the first streaming image based on the first protocol from the image capturing device 110 using the request device 200. Accordingly, the user may obtain the first streaming image captured by the image capturing device 110 of the body camera 100 by sending a streaming request using the request device 200.

In some embodiments, controlling the image capturing device 110 to capture the first streaming image in response to the streaming request and transmitting the first streaming image to the request device 200 under the first protocol (i.e., Step S423) is performed after determining whether the domain of the body camera 100 matches the domain of the request device 200 (i.e., Step S422).

Step S424: Controlling the image capturing device 110 to capture the second streaming image in response to the streaming request and transmitting the second streaming image to the request device 200 under the second protocol when the domain of the body camera 100 is different from the domain of the request device 200.

As shown in Fig. 1, in this embodiment, when the processor 150 of the body camera 100 determines that the domain of the body camera 100 is different from the domain of the request device 200, the processor 150 controls the image capturing device 110 to capture the second streaming image in response to the streaming request and transmits the second streaming image to the request device 200 under the second protocol. Specifically, in the case where the domain of the body camera 100 is different from the domain of the request device 200, the protocol switching module 130 of the body camera 100 switches the communication protocol of the body camera 100 to the second protocol. When the communication protocol of the body camera 100 is the second protocol, the processor 150 transmits the second streaming image captured by the image capturing device 110 to the request device 200. In some embodiments in which the domain of the body camera 100 is different from the domain of the request device 200, the second protocol may be, for example, a Real-Time Messaging Protocol (RTMP). More specifically, because the domain of the body camera 100 is different from the domain of the request device 200, the body camera 100 cannot directly transmit the second streaming image to the request device 200 under the second protocol. Instead, the second streaming image must be transmitted to the request device 200 via the media server 300 as a transmission relay station. In other words, when the domain of the body camera 100 is different from the domain of the request device 200, the body camera 100 may transmit the second streaming image to the media server 300 under the second protocol via the network ITN that is of an external network (e.g., public network) type, and then the media server 300 may transmit the second streaming image to the request device 200 under the second protocol via the network ITN that is also of an external network (e.g., public network) type.

In one embodiment, when the processor 150 of the body camera 100 determines that the domain of the body camera 100 is different from the domain of the request device 200, the processor 150 controls the protocol switching module 130 to switch the communication protocol to the second protocol in response to the streaming request from the request device 200. Then, the processor 150 of the body camera 100 transmits the second streaming image to the media server 300 via the network ITN that is an external network. Then, the user of the request device 200 receives the second streaming image based on the second protocol from the media server 300 using the request device 200. Accordingly, the user may obtain the second streaming image captured by the image capturing device 110 of the body camera 100 by sending a streaming request using the request device 200.

In some embodiments, controlling the image capturing device 110 to capture the second streaming image in response to the streaming request and transmitting the second streaming image to the request device 200 under the second protocol (i.e., Step S424) is performed after determining whether the domain of the body camera 100 matches the domain of the request device 200 (i.e., Step S422).

In some embodiments, in Step S423 and Step S424, the image capturing device 110 captures both the first streaming image and the second streaming image simultaneously and continuously generates a video file storing the first streaming image and another video file storing the second streaming image. Then, when the protocol switching module 130 switches the communication protocol to the first protocol, the processor 150 transmits only the first streaming image to the request device 200 without transmitting the second streaming image, so that the user of the request device 200 receives the first streaming image. Alternatively, when the protocol switching module 130 switches the communication protocol to the second protocol, the processor 150 transmits only the second streaming image to the request device 200 without transmitting the first streaming image, so that the user of the request device 200 receives the second streaming image.

Step S430: Enabling the image capturing device 110 to stop capturing the first streaming image and the second streaming image when the body camera 100 is docked with the base body 500.

Fig. 5A illustrates a schematic view of the body camera 100 docked with the base body 500 and being in a first state S1 in accordance with an embodiment of the present disclosure. Fig. 5B is a schematic view of the display device 160 of the body camera 100 displaying a text message TX1 in accordance with an embodiment of the present disclosure. As shown in Fig. 5A, in this embodiment, the base body 500 includes an accommodating space 510 and a connector 520. The accommodating space 510 is a recess defined by the base body 500 to accommodate the body camera 100. The connector 520 protrudes into the accommodating space 510 and is configured to be coupled with the body camera 100. Specifically, the connector 520 of the base body 500 is configured to be coupled with the socket 180 of the body camera 100 so that the body camera 100 is electrically connected to the base body 500. In some embodiments, the connector 520 may be, for example, a male connector. In some embodiments, the body camera 100 is partially accommodated in the accommodating space 510 of the base body 500. Specifically, when the body camera 100 is coupled with the base body 500, the connector 520 and the socket 180 are coupled with each other, and the image capturing device 110, the display device 160, and the power switch 170 are exposed relative to the base body 500. As shown in Fig. 5A and Fig. 5B, this allows the user to operate the power switch 170 and be informed via the text message TX1 displayed by the display device 160 that the body camera 100 is in the first state S1 when the body camera 100 is docked with the base body 500. In addition, since the image capturing device 110 of the body camera 100 is not blocked by the base body 500 in the first state S1, the image capturing device 110 can capture the first or second streaming image without encountering visual obstruction.

As shown in Fig. 5A and Fig. 5B, when the body camera 100 is in the first state S1, the processor 150 stops the image capturing device 110 from capturing the first streaming image and the second streaming image. In some embodiments, when the body camera 100 is docked with the base body 500 and in the first state S1, the image capturing device 110 stops streaming, and the processor 150 enables the base body 500 to allow charging the body camera 100. Specifically, when the connector 520 of the base body 500 is coupled with the socket 180 of the body camera 100, a female connector in the socket 180 generates a docking signal and sends it to the processor 150. After receiving the docking signal, the processor 150 enables the base body 500 to allow charging the body camera 100 and to interrupt the capturing of the first streaming image and the second streaming image by the image capturing device 110. In some embodiments, when the body camera 100 is in the first state S1, the display device 160 displays the text message TX1.

In one embodiment, when the body camera 100 is activated by the user by pressing the power switch 170, the image capturing device 110 continuously captures the first streaming image and the second streaming image. Then, when the user of the body camera 100 places the body camera 100 into the accommodating space 510 of the base body 500 and couples the connector 520 of the base body 500 with the socket 180 of the body camera 100, the image capturing device 110 stops capturing the first streaming image and the second streaming image and the base body 500 is enabled to charge the body camera 100. In addition, when the user of the body camera 100 docks the body camera 100 with the base body 500 and the docking signal is generated and sent to the processor 150, the display device 160 displays the text message TX1 to indicate that the body camera 100 is in an idle state and is not performing streaming.

In some embodiments, enabling the image capturing device 110 to stop capturing the first streaming image and the second streaming image (i.e., Step S430) is performed after controlling the image capturing device 110 of the body camera 100 to capture the first streaming image and the second streaming image based on the first protocol and the second protocol of the body camera 100 (i.e., Step S420).

Step S440: Enabling the image capturing device 110 to allow capturing the first streaming image and the second streaming image when the body camera 100 is not docked with the base body 500.

Fig. 6A is a schematic view of the body camera 100 not docked with the base body 500 and being in a second state S2 in accordance with an embodiment of the present disclosure. Fig. 6B is a schematic view of the display device 160 of the body camera 100 displaying a text message TX2 in accordance with an embodiment of the present disclosure. As shown in Fig. 6A, in this embodiment, the body camera 100 is not docked with the base body 500. Specifically, the body camera 100 is detached from the accommodating space 510 of the base body 500, and the connector 520 of the base body 500 is disengaged from the socket 180 of the body camera 100. As shown in Fig. 6B, when the body camera 100 is not docked with the base body 500, the display device 160 displays the text message TX2. This allows the user to be informed via the text message TX2 displayed on the display device 160 that the body camera 100 is in the second state S2 when not docked with the base body 500.

As shown in Fig. 6A and Fig. 6B, when the body camera 100 is in the second state S2, the processor 150 enables the image capturing device 110 to allow capturing the first streaming image and the second streaming image. In some embodiments, when the body camera 100 is not docked with the base body 500 and is in the second state S2, the image capturing device 110 is activated and starts streaming. Specifically, when the connector 520 of the base body 500 is detached from the socket 180 of the body camera 100, a female connector in the socket 180 generates an undocking signal and sends it to the processor 150. After receiving the undocking signal, the processor 150 activates the body camera 100 and controls the image capturing device 110 to start capturing the first streaming image and the second streaming image. In other words, in this case, the body camera 100 may be activated by being detached from the base body 500, instead of being activated by pressing the power switch 170. In some embodiments, when the body camera 100 is in the second state S2, the display device 160 displays the text message TX2.

In one embodiment, when the user of the body camera 100 detaches the body camera 100 from the base body 500 (for example, by disengaging the connector 520 of the base body 500 from the socket 180 of the body camera 100), the image capturing device 110 is enabled to capture the first streaming image and the second streaming image. In other words, when the user of the body camera 100 operates the body camera 100 such that it transitions from the first state S1 to the second state S2, the body camera 100 can immediately switch from an idle state (e.g., stopped streaming) to a working state (e.g., activated and streaming). In addition, when the user of the body camera 100 causes the body camera 100 to be undocked from the base body 500 and an undocking signal is sent to the processor 150, the display device 160 displays the text message TX2 to indicate that the body camera 100 is in a working state and performing audio and video streaming.

In some embodiments, enabling the image capturing device 110 to allow capturing the first streaming image and the second streaming image (i.e., Step S440) is performed after controlling the image capturing device 110 of the body camera 100 to capture the first streaming image and the second streaming image based on the first protocol and the second protocol of the body camera 100 (i.e., Step S420).

By performing the method M as shown in Fig. 2 of the present disclosure, not only can a user of the request device 200 be provided with corresponding audio and video streaming services under different communication protocols (e.g., the first protocol and the second protocol) such as the first streaming image and the second streaming image, but also a user of the body camera 100 can immediately activate the body camera 100 to capture streaming images in emergency situations.

From the above detailed description of the specific embodiments of the present disclosure, it can be clearly seen that in the body camera and the method of controlling the same of the present disclosure, since the body camera includes a protocol switching module, the processor can determine whether to transmit the corresponding streaming image to a request device using a first protocol or a second protocol by determining whether a domain of the body camera matches a domain of the request device. In the body camera and the method of controlling the same of the present disclosure, because the image capturing device stops capturing the first streaming image and the second streaming image only when the body camera is docked with a base body, the base body can charge the body camera during docking, and the body camera can continue capturing streaming images when it is not docked. In the body camera and the method of controlling the same of the present disclosure, because the image capturing device is enabled to capture the first streaming image and the second streaming image when the body camera is not docked with the base body, the body camera can immediately stream the current image when it is detached from the base body by the user, thereby enabling real-time recording of scenes during emergency situations. Overall, the body camera and the method of controlling the same of the present disclosure not only provide audio and video streaming services under different communication protocols but also achieve the purpose of allowing users to immediately activate the body camera to stream images in emergency conditions.

## Claims

1. A method (M) of controlling a body camera (100), comprising:
controlling an image capturing device (110) of the body camera (100) to capture a first streaming image and a second streaming image of the image capturing device (110) based on a first protocol and a second protocol of the body camera (S420);
enabling the image capturing device (110) to stop capturing the first streaming image and the second streaming image when the body camera (100) is docked with a base body (500) (S430); and
enabling the image capturing device (110) to allow capturing the first streaming image and the second streaming image when the body camera (100) is not docked with the base body (500) (S440).

2. The method of claim 1, wherein the first streaming image is based on the first protocol, and the second streaming image is based on the second protocol.

3. The method of claim 1 or 2, wherein the first protocol is a real-time streaming protocol (RTSP), and the second protocol is a real-time messaging protocol (RTMP).

4. The method of any of claims 1 to 3, wherein the base body (500) is enabled to charge the body camera (100) when the body camera (100) is docked with the base body (500).

5. The method of any of claims 1 to 4, further comprising:
controlling the image capturing device (110) to capture the first streaming image and the second streaming image when the body camera (100) is activated.

6. The method of any of claims 1 to 5, further comprising displaying a first text message (TX1) when the body camera (100) is docked with the base body (500) and a second text message (TX2) when the body camera (100) is not docked with the base body (500).

7. The method of any of claims 1 to 6, further comprising enabling the base body (500) to allow charging the body camera (100) and to interrupt the capturing of the first streaming image and the second streaming image by the image capturing device (110) after receiving a docking signal.

8. The method of any of claims 1 to 7, wherein controlling the image capturing device (110) of the body camera (100) to capture the first streaming image and the second streaming image of the image capturing device (110) comprises:
sending a streaming request to the body camera (100) by a request device (200);
determining whether a domain of the body camera (100) matches a domain of the request device (200);
controlling the image capturing device (110) to capture the first streaming image in response to the streaming request and transmitting the first streaming image to the request device (200) under the first protocol when the domain of the body camera (100) matches the domain of the request device (200) (S423); and
controlling the image capturing device (110) to capture the second streaming image in response to the streaming request and transmitting the second streaming image to the request device (200) under the second protocol when the domain of the body camera (100) is different from the domain of the request device (200) (S424).

9. The method of claim 8, wherein the image capturing device (110) transmits the second streaming image to a media server (300) under the second protocol, and the media server (300) transmits the second streaming image to the request device (200).

10. A body camera (100), comprising:
an image capturing device (110) configured to capture a first streaming image and a second streaming image;
a communication module (120) configured to be connected to an internet (ITN);
a protocol switching module (130) configured to switch a communication protocol of the body camera (100) between a first protocol and a second protocol;
a common memory (140) configured to store the first streaming image based on the first protocol and the second streaming image based on the second protocol; and
a processor (150) electrically or communicatively connected to the image capturing device (110), the communication module (120), the protocol switching module (130), and the common memory (140), wherein the processor (150) is configured to:
control the image capturing device (110) to capture the first streaming image or the second streaming image based on the communication protocol of the body camera (100);
enable the image capturing device (110) to allow capturing the first streaming image and the second streaming image when the body camera (100) is not docked with a base body (500); and
enable the image capturing device (110) to stop capturing the first streaming image and the second streaming image when the body camera (100) is docked with the base body (500).

11. The body camera of claim 10, wherein the processor (150) is further configured to:
enable the base body (500) to allow charging the body camera (100) when the body camera (100) is docked with the base body (500).

12. The body camera of claim 10 or 11, wherein the processor (150) is further configured to:
control the image capturing device (110) to capture the first streaming image and the second streaming image when the body camera (100) is activated.

13. The body camera of any of claims 10 to 12, wherein the communication module (120) is further configured to receive a streaming request from a request device (200).

14. The body camera of claim 13, wherein the processor (150) is further configured to:
determine whether a domain of the body camera (100) matches a domain of the request device (200);
control the image capturing device (110) to capture the first streaming image in response to the streaming request and transmit the first streaming image to the request device (200) under the first protocol when the domain of the body camera (100) matches the domain of the request device (200); and
control the image capturing device (110) to capture the second streaming image in response to the streaming request and transmit the second streaming image to the request device (200) under the second protocol when the domain of the body camera (100) is different from the domain of the request device (200).

15. The body camera of claim 14, wherein the image capturing device (110) transmits the second streaming image to a media server (300) under the second protocol, and the media server (300) transmits the second streaming image to the request device (200).
